# EUROPEAN PATENT SPECIFICATION

(11) **EP 0 672 908 B1**
(45) Date of publication and mention of the grant of the patent: **27.08.1997**
(21) Application number: 95201295.3
(22) Date of filing: 27.11.1991
(51) Int. Cl.: G01R 1/06, G01N 27/28

(54) **Probe unit for investigating fluids**
Messfühler zur Messung der Eigenschaften von Fluiden
Sonde de mesure de caractéristiques d'un fluide

(30) Priority: 27.11.1990 US 619288
(43) Date of publication of application: 20.09.1995
(62) Divisional of application: 91920657.3
(73) Proprietor: SOLOMAT LIMITED, Bishop s Stortford, Hertfordshire CM22 6PU (GB)
(72) Inventor: Saffell, John Robert, Honiton, Devon EX14 8SL (GB)
(74) Representative: Gold, Tibor Z.

(56) References cited:
- WO-A-86/01600
- WO-A-87/00286
- FR-A- 2 614 422
- US-A- 4 260 950

## Description

### Technical Field of Invention

The present invention relates to an improved sonde for measuring electrical magnitudes or values linked with electrical magnitudes.

### Definitions

As used herein, the terms "sonde" and "sonde unit" are used interchangeably to refer to a housing which comprises a plurality of electrodes/probes and circuitry associated therewith.

As used herein, the terms "electrodes", "probes", and "pick-up means" are used interchangeably to refer to a means which monitors specific parameters in a fluid and converts this monitored measurement into an analog signal.

### Background Art

In their simplest form, sondes consist of a detecting or sensing element e.g. an electrode, a probe, etc. and electronic circuitry for processing signals supplied by the element. Metering apparatuses also generally comprise a display means or some other means for transmitting the results to users.

Since their introduction into the industry, metering apparatuses have gone through various advancements. An example of one such advancement is the implementation of microprocessors which enable the use of several electrodes/probes within one unit. This design facilitates transport of the apparatus. Moreover, the implementation of a sonde with a plurality of electrodes reduces the number of cables and components required.

Sondes have the ability to measure a plurality of parameters, one such parameter being associated with each individual electrode. The known sondes include means for selecting a given electrode the output signal of which is to be monitored at a given point in time.

After a particular electrode has been selected, its analog output signal is processed. This signal can be processed in many different ways. Examples of such ways include: (a) sending the analog signal from the selected electrode directly to an instrument or user for measurement, analysis, calibration, display and/or storage; and/or (b) sending the analog signal from the selected electrode to a remote central processing unit, wherein the analog signal is first digitised, and then transmitted to an instrument or user for measurement, analysis, calibration, display and/or storage.

Conventional sondes have inherent limitations and/or problems associated therewith. One major problem pertains to their inability consistently to reproduce measured parameters accurately when the analog signal from the electrode/probe has to be transmitted over a substantial distance. When the distance between the sonde unit and the central processing unit is substantial (i.e. generally anything over ten metres), the signal generally begins to deteriorate. This deterioration affects the accuracy of the measurement.

One method of attempting to overcome this problem is by employing highly-sophisticated analog cabling between the sonde unit and the central processing unit. While this technique can work under certain conditions, it is very expensive, and has a high cost per metre of cabling. If the sonde unit is employed to measure various parameters in water at depths of over 100 metres, for example, the cost of employing the aforementioned technique to overcome this particular problem can become prohibitively expensive.

Another method of attempting to overcome the problem associated with accurately reproducing measured parameters and transmitting these measurements over a substantial distance is by programming the central processing unit to compensate for the deterioration of the transmitted signal. This method can successfully be employed, but only under those circumstances where all other variables (e.g. distance between electrodes and central processing unit, ambient temperature, solution temperature, etc.) remain relatively constant. However, since in the real world nothing remains constant, and since sondes are generally used under a multitude of differing conditions, this technique of overcoming the problem is generally impractical.

Accordingly, a sonde associated with a metering apparatus which can accurately reproduce measurements without substantially increasing the cost of the device would be a welcome improvement in the industry. It would be an even more welcome improvement if this high level of reproducibility could be accomplished when the sonde unit is a substantial distance from the central processing unit.

Another problem associated with many of the conventional multi-probed metering apparatuses pertains to the scope for their functions (i.e., the flexibility of the metering apparatus). Specifically, many of the conventional sondes have only a limited amount of flexibility when interfaced with other devices such as (a) devices which display the parameters being measured, (b) control means which can trigger various functions such as the sounding of an alarm, the opening/closing of a valve, etc., and/or (c) computers for compiling and/or processing the monitored information.

Since it is often desirable to change parameters, analyze measured parameters, and/or calculate non-measured parameters on site, and since it is cumbersome continually to have a computer available, it would be a welcomed improvement in the industry if a sonde could be designed to make elaborate mathematical computations without having to be interfaced with an external memory storage and/or data processing source.

When monitoring specific parameters of a fluid (e.g. water) with a multi-probed metering apparatus, it is often desirable to have the fluid continually flowing over the electrodes. Therefore, when the fluid is stagnant, an external agitator or stirrer is conventionally employed. In conventional apparatuses, this external stirrer unit is an independent component generally attached to the opposing faces of the sonde unit such that the propeller of the stirrer unit is pointing back towards the plurality of electrodes/probes. This conventional external stirrer unit is generally connected to a remote central processing unit (CPU) by a separate external cable.

There are inherent problems associated with such designs. One such problem pertains to size. Generally, due to the presence of the external stirrer unit and the separate external power cable therefor, the sonde unit becomes bulky and difficult to handle.

Another problem is associated with the external cable. in addition to the inherent costs, the existence of a separate cable between the stirrer and the CPU makes it susceptible to the often adverse conditions in which the electrodes have been submerged, especially at its connection points. Accordingly, the external cables associated with conventional stirrer units have to be frequently repaired, maintained and/or replaced.

In view of the above, it would also be a welcomed improvement in the industry if a sonde could be devised to minimize the cost of employing, maintaining and/or replacing the stirrer.

Yet another problem associated with the conventional external stirrers pertains to their energy consumption. Specifically, stirrer units inherently consume a large amount of energy. Since most sondes are commonly used in the field, they are generally run from battery packs. Since the life of a battery depends largely upon the amount of energy being consumed, it is desirable to minimize the amount of energy consumed for extraneous purposes e.g., running a stirrer. Yet it is necessary to have the fluid flowing over the electrodes, as opposed to being stagnant. In view of the above, the industry is faced with a dilemma. Accordingly, it would be another welcomed improvement if a means could be devised to maintain fluid flow over the electrodes, while minimizing energy consumed.

Yet another problem associated with many of the conventional sondes pertains to their methods of calibration. For example, sondes are calibrated by the following technique. First, a calibration solution, useful for calibrating one specific parameter of one specific electrode is placed into a calibration bath. Since all electrodes of most conventional sondes are housed in one sonde unit, all electrodes are thus dipped into this specific calibration solution. The one electrode relating to the specific calibration solution in the bath is then calibrated.

Thereafter, that particular calibration solution is discarded from the bath; and the electrodes and the solution container are rinsed. This filling-calibration-rinsing process is then repeated for each of the remaining electrodes until all are calibrated for that specific parameter. However, since in many instances electrodes also have to be calibrated for other parameters, this generally means that the aforementioned filling-calibration-rinsing process has to be repeated for each electrode with a second type of calibration solution.

As can be seen, the conventional method of calibrating sonde electrodes is extremely time-consuming. Moreover, despite the careful rinsing, electrodes may to some degree be contaminated by the other various calibration solutions, e.g., pH electrodes can be contaminated by turbidity calibration solutions. Accordingly, a device or technique which simplifies the calibration of sonde electrodes and/or eliminates the contamination of the various electrodes by extraneous, non-related, calibration solutions, will be yet another welcomed improvement in the industry.

A further problem associated with sondes pertains to repairing and/or replacing damaged electrodes, and/or to changing the parameters which the electrodes monitor. Specifically, since conventional sondes are used to measure various parameters in liquids the connections between the electrodes/probes and circuitry within the sonde unit must remain dry. Therefore, the sonde unit must be water-tight. Due to this requirement, many sonde units are factory sealed. Therefore, if a particular electrode has to be repaired or replaced for one reason or another, the entire sonde unit generally has to be taken out of commission and returned to a shop where the work can be performed; this is evidently very inconvenient to a user.

If the sonde is being employed to continually monitor specific parameters, this generally requires a user to have more than one sonde unit available on site. Since the sonde units can cost several thousand U.S.A. dollars, depending upon the number of electrodes and the circuitry therein, it is very costly to have a number of sonde units available on site. Accordingly, another welcomed improvement in the industry would be a multi-probed metering apparatus designed for field replacement and/or repair of electrodes/probes without destroying the necessary water-tight configuration of the sone unit.

Finally, electrodes should not be allowed to dry out completely when not in use, i.e. during prolonged storage, as this may affect their operability and/or accuracy. It would be most useful to store electrodes in a permanently moist atmosphere.

### Summary of the Invention

It is one object of the present invention to provide an improved sonde which can accurately reproduce monitored parameters over substantial distances.

It is another object of the present invention to provide an improved sonde which can make multi-pass linearization mathematical computations without having to be interfaced with an external memory storage and/or data processing source.

It is a further object of the present invention to provide an improved sonde comprising an improved means of calibration.

According to one aspect, there is provided a sonde according to claim 1.

The preferred sonde of the present invention includes: (a) a plurality of electrodes and circuitry associated therewith for signal conditioning, (b) a built-up analog/digital (A/D) converter, (c) a built-in selector circuitry, and (d) a built-in primary digital signal processing circuit, eg. a microprocessor. The selector circuitry identifies each of the plurality of electrodes in order to control the treatment of the signals provided thereby. The selector circuitry also interfaces the electrodes with the A/D converter. The microprocessor is in bi-directional digital communication with the analog/digital converter and in uni-directional digital communication with the selector circuitry.

The sonde of the present invention is adapted for connection to a separate apparatus including a central processing unit. This central processing unit comprises: (a) a power supply for the central processing unit and for the sonde unit, (b) a real-time clock, (c) a random access memory storage (RAM) capable of storing at least 500 bytes of information, (d) an arithmetic and logic unit (ALU) capable of making multi-pass linearization mathematical computations, (e) a digital signal processing circuit (microprocessor) supplying a digital output, (f) means for processing the digital output from the secondary digital signal processing circuit and (g) a digital output means. When the sonde is connected to said apparatus, the latter's microprocessor is in bi-directional digital communication with the following components: the sonde microprocessor signal processing circuit, the real-time clock means, the RAM, the ALU, and the digital output means.

An important aspect of the present invention constitutes means for calibrating the electrodes, including a calibration cup having defined therein a plurality of, e.g. vertically-oriented wells passing partially therethrough. The wells are positioned such that they correspond with the configuration of the plurality of electrodes in the sonde. Each well is dimensioned to accept the specific electrode to which it corresponds, while leaving a sufficient gap therearound for fluid flow.

### Brief Description of the Drawings

The invention and many attendant advantages thereof will be better understood by reference to the following detailed description in conjunction with the accompanying Figures, wherein:-
Figure 1 is an overall schematic circuit diagram of a sonde according to one embodiment of the present invention,
Figure 2 is an overall schematic circuit diagram of a multi-probed/multi-sonde apparatus according to another embodiment,
Figure 3 is an overall schematic circuit diagram of a multi-probed/multi-sonde apparatus according to still another embodiment,
Figure 4 is a partial side cross-sectional view of sonde with an improved stirrer,
Figure 5 is a partial side cross-sectional view of a sonde with means for field repairing and/or replacing electrodes,
Figure 6 is an elevational view of one embodiment of an improved calibration means for a sonde, in accordance with a further embodiment of the present invention,
Figure 7 is a top view of one embodiment of an improved calibration means,
Figure 8 is a cross-sectional view of the calibration means illustrated in Figure 7, taken along the plane indicated by the line 8-8, and
Figure 9 is a partial cross-sectional view of a sonde with an improved stirrer and an improved calibration means.

### Detailed Description of the Invention

The apparatus of the present invention solves many of the problems which have been plaguing the industry for years.

In the most general case of the present invention, analog signals from the electrodes of the sonde are transmitted to an input signal acquisition unit (i.e., an A/D converter) to be digitized. Generally, the A/D converter is combined with an electronic selector circuit which alternatively selects one or the other of the two routes to which the electrodes are cocnnected.

The digital signals are then transmitted to a microprocessor in the sonde for measurement, which is in bi-directional digital communication with the A/D converter and is in uni-directional digital communication with the electronic selector circuit.

The digital output is then transmitted from the microprocessor in the sonde to a discrete apparatus containing a central processing unit (CPU) in bi-directional digital communication with the sonde microprocessor, a real-time clock, a RAM capable of storing at least 500 bytes of information, an ALU and a digital output means.

The digitized signal transmitted from the sonde microprocessor is subjected to multi-pass linearization mathematical computations in the CPU's microprocessor. During the multi-pass linearization mathematical computations, information is provided to the CPU's microprocessor, the RAM, the ALU and the real-time clock.

The CPU's microprocessor after making the aforementioned computations, produces a digital output wich can be used as such to determine for example, whether there is a high level or low level signal, or can be converted to an analog signal by a digital/analog (D/A) converter and used as such.

In the sonde unit and the central processing unit of the present invention, there are signal conditioning circuits associated with each specific electrode.

Multi-pass linearization computations of the signals within the CPU simplifies the structure of the sonde and reduces costs. Indeed, the measurements to be linearized are supplied by the sonde microprocessor when interfaced with the CPU's microprocessor. Therefore, certain electrodes may have a non-linear response without this complicating the sonde to which they are connected.

The junction between the sonde and the CPU assures electrical contact between the two elements for the following purposes:
(a) power supply and earthing supplied by the CPU to the sonde; and
(b) bi-directional digital communication between the sonde microprocessor and the CPU's microprocessor.

By converting the analog signals from the electrodes to digital signals in the sonde there need only be bi-directional digital communication between the two microprocessors. This type of circuitry reduces a number of contacts between the CPU and the sonde. Moreover, this type of circuitry also eliminates the need of highly-sophisticated analog cabling between the sonde and the CPU. Therefore, by the implementation of the circuitry embodied in the present invention, the total number of interface lines between the sonde and the CPU is substantially reduced. Moreove the use of analog cabling between the two units is eliminated.

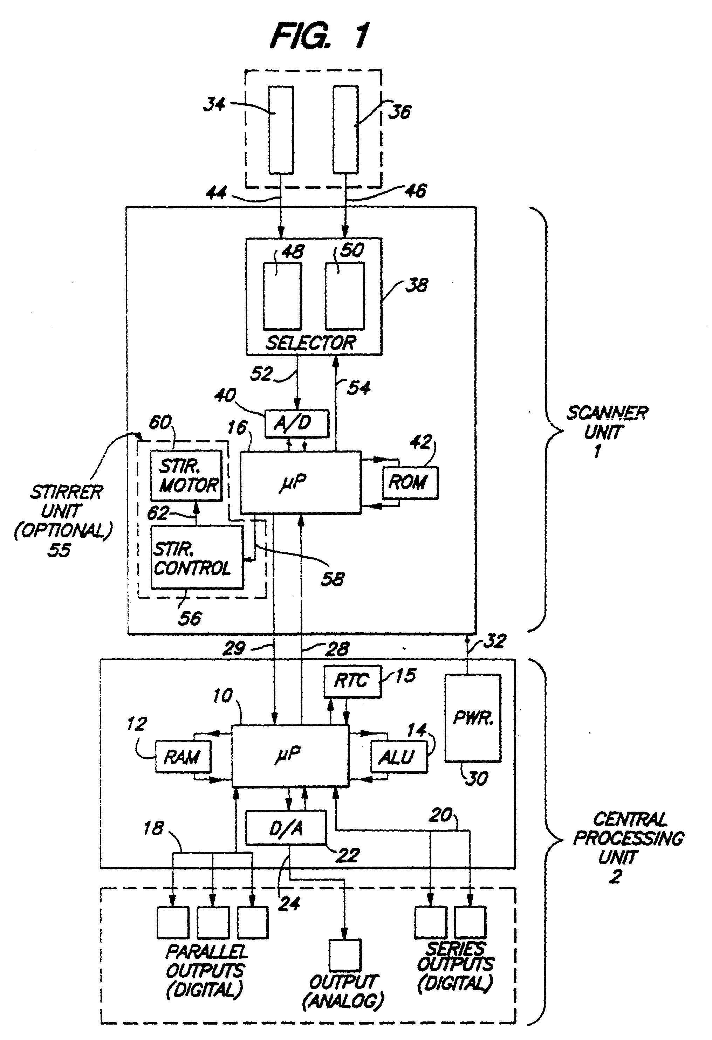

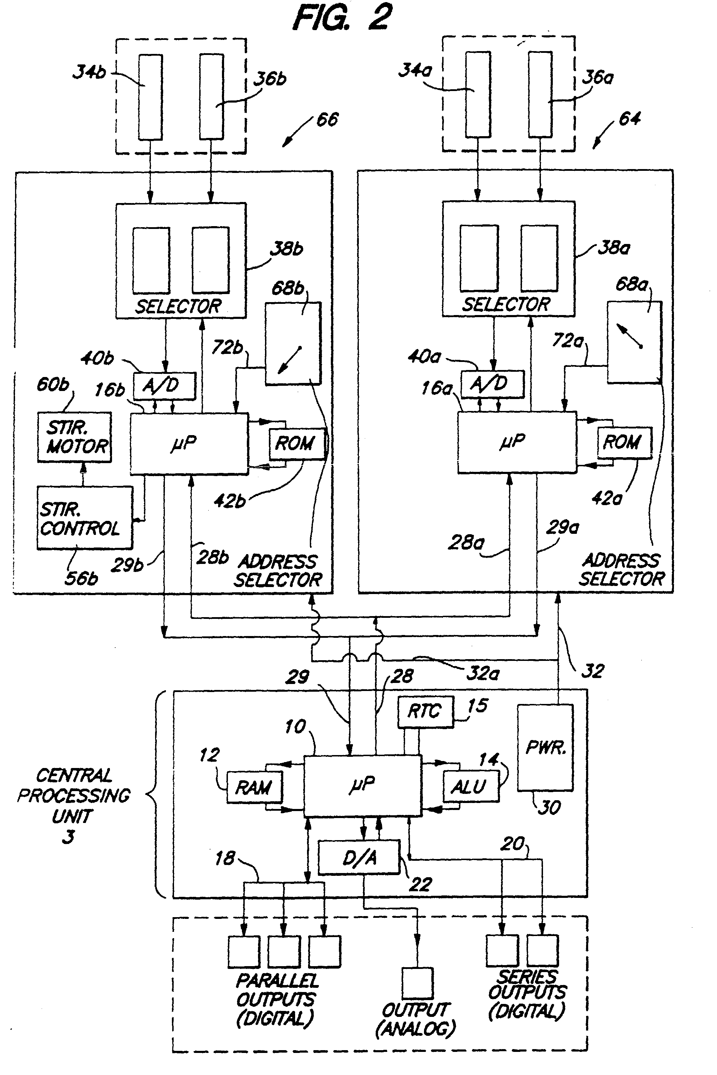

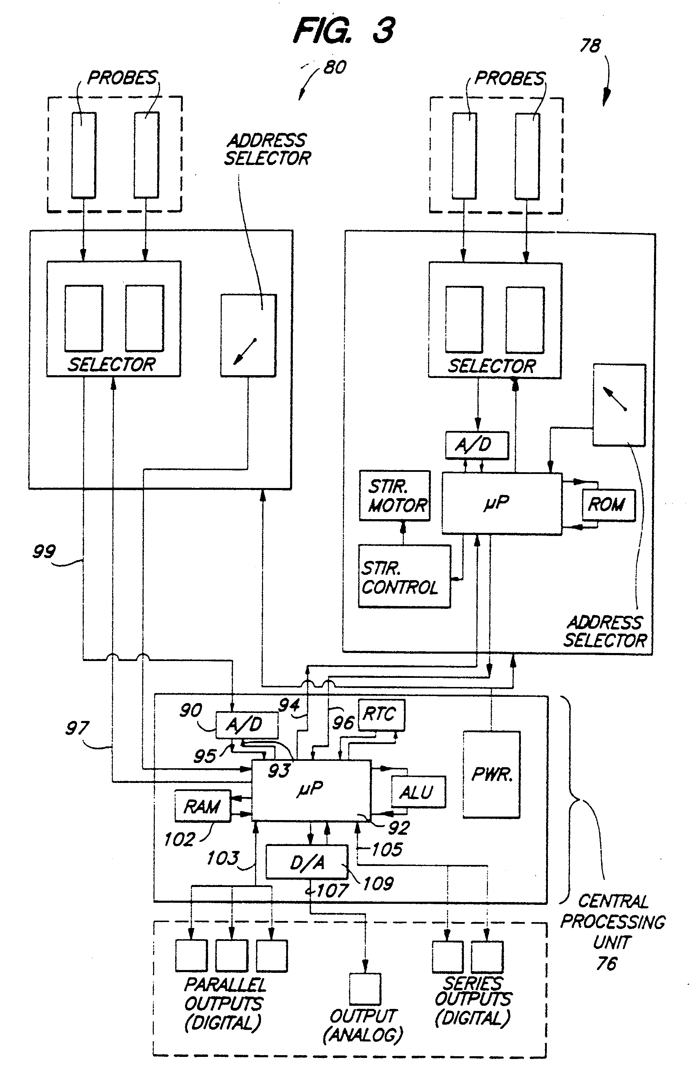

Turning now to the Figures, Figure 1 illustrates an overall schematic circuit diagram of a preferred apparatus according to the invention. The apparatus comprises a sonde unit 1 and a CPU 2. As will be seen from Figures 2 and 3, the apparatus of the present invention may comprise a plurality of sonde units.

The CPU 2 comprises a micro-processor 10 in bi-directional digital communication with a RAM 12, an ALU 14 capable of making multi-pass linearization mathematical computations, a real-time clock or RTC 15, a sonde micro-processor 16 and the digital output means.

Microprocessor 10 produces a digital output which is transmitted to the digital output means. The communication between the CPU's microprocessor and the digital output means may be in direct contact, in parallel form via bus 18 and/or in series via bus 20.

Optionally, the digital output from microprocessor 10 can be converted to an analog signal. In this instance, the digital output means can comprise D/A converter 22. This ultimately results in an analog output from microprocessor circuit 10 via bus 24.

The digital outputs produced by the CPU's microprocessor 10 may be used, for example, for down-loading digital information into, or for receiving digital information from, an external source (e.g., a computer). This type of information transfer can be accomplished by any suitable means known to those skilled in the art. Examples of such suitable means include, but are not limited to, the implementation of RS232 and/or RS485 bi-directional digital buses.

CPU 2 is connected to sonde 1 via buses 28 and 29. These buses serve as a means for bi-directional digitial communication between microprocessor 10 and microprocessor 16. CPU 2 also includes a power supply 30, such as e.g. a dry cell battery, a wet cell battery, a DC converter and/or an AC converter. Power supply 30 is connected not only to the circuits of CPU 2, but also to sonde via line 32.

Sonde 1 includes electrodes 34 and 36, an electronic selector circuit 38, an input signal acquisition circuit (i.e., A/D converter 40), microprocessor 16 and a source of process operating memory (i.e., ROM 42).

Selector circuit 38 is linked to electrodes 34 and 36 through lines 44 and 46, respectively. Selector circuit 38 controls the switching between the various electrodes via switching circuits 48 and 50.

Line 54, between selector circuit 38 and microprocessor 16, serves as a means for interrogating selector circuit 38 by the CPU's microprocessor 10 via the sonde microprocessor 16. This interrogation is carried out by an exchange of digital signals from microprocessor 10 to microprocessor 16, and then to selector circuit 38. Through this interrogation scheme, it is possible to control from CPU 2 the type of measurement to be carried out, the type of electrode to be used, the nature of the signal from the selected electrode and/or which electrode(s) are to be employed.

In practice, electrodes 34 and 36 are simultaneously monitoring different parameters. The user selects to receive information from one of the probes through the CPU's microprocessor 10. Microprocessor 10 sends a digital signal to sonde microprocessor via line 28, and then to selector circuit 38 via line 54.

The digitized signal received from microprocessor 16 activates the appropriate switching circuit. This enables an analog signal from one of the probes to pass through line 52 to A/D converter 40, where it is digitized.

After the analog signal has been digitized in A/D converter 40, the digital signal is transmitted therefrom to microprocessor 16, and from there to microprocessor 10 through line 29.

Once the microprocessor 10 receives the digitized signal from microprocessor 16, it can process it in many different ways, such as to analyze, display and/or store the information, to use the information for recalibration purposes, and/or subject the information to multi-pass linearization mathematical computations.

After processing the information, microprocessor 10 produces digital outputs which can be used as such in parallel or series forms and/or which can be converted to analog signals via optional D/A converter(s) 22.

Regardless of their form, these digital outputs are then transmitted to a digital output means for further processing, such as light-emitting diode (LED) displays, liquid crystal diode (LCD) displays, external computer and/or monitoring sources, a D/A converter, and/or any combination thereof.

Since the RAM 12 has the capability of storing at least 500 bytes of information, and the presence of real-time clock 15, the output from microprocessor 10 can be employed as a real-time monitor/alarm and/or for purposes of remote data logging.

Since the analog signals from probes 34 and 36 are digitized in the sonde 1, as opposed to the CPU 2, there is no need for sophisticated analog cabling between the sonde 1 and CPU 2. Moreover, since it is much simpler to reproduce a digital signal than analog signal, the degree of digital signal deterioration between sonde unit 1 and central processing unit 2 is negligible.

In view of the above, the sonde of the present invention can accurately reproduce monitored parameters over a substantial distance. Moreover, since there is no need for high-priced analog cabling for using the present invention, this accurate reproduction of monitor parameters can be accomplished at a substantial decrease in cost.

As stated earlier, the RAM 12 has the capability of storing at least 500 bytes of information. This enables the metering device of the present invention to make multi-pass linearization mathematical computations. However, it can be programmed to handle between 500 and 5,000,000 bytes of information so as to satisfy most users' needs. In practical applications of monitoring various parameters in aqueous solutions of monitoring various parameters in aqueous solutions, it is generally preferred that the RAM should be capable of handling between 5,000 and 500,000, preferably 10,000 and 250,000 bytes.

With the presence of a RAM and RTC in CPU 2, the apparatus of the present invention is able to make multi-pass linearization mathematical computations. Moreover, the presence of these components also affords the apparatus of the present invention more flexibility since it can perform real-time monitoring/alarming and/or remote data logging.

The apparatus also includes a fluid flow-maintaining means or stirrer, integrated into the sonde unit, as opposed to being an external fixture thereon. The stirrer comprises a stirrer control, a stirrer control, a stirrer driving component (motor) and a propeller.

Referring now to Figure 1, the stirrer is generally designated by 55 and includes stirrer control 56 and stirrer motor 60. Stirrer control 56 is in uni-directional digital communication with sonde microprocessor 16 via line 58 and with the stirrer motor 60 via line 62.

Since stirrer control 56 is in uni-directional digital communication with microprocessor 16, which is in turn in bi-directional digital communication with CPU microprocessor 10, the stirrer can be controlled from the CPU 2, e.g. as to the angular sense of rotation of the propeller, the stirrer R.P.M, intermittent rotation of the stirrer, e.g., run for one minute, then off for one minute, thus conserving energy; and/or initially to run for a longer period of time and/or at a higher P.P.M. and then go to intermittent running.

Since the circuitry for running the stirrer is within the sonde unit 1, the unit can be employed to maintain fluid flow over the electrodes without subjecting this circuitry to the adverse conditions in which the sonde unit is submerged. Also, since the stirrer can be controlled to run intermittently, the energy consumption associated with maintaining fluid flow over the electrodes can be substantially reduced.

As can be seen, the implementation of the improved fluid flow-maintaining means of the present invention need not be limited to the metering apparatus disclosed herein.

Figure 2 illustrates another embodiment in which one CPU 3 and two separate sonde units 64 and 66 are provided. The CPU comprises all the same components of CPU 2 of Figure 1, but here power supply 30 is connected to sonde unit 64 via line 32 and to sonde unit 66 via line 32a.

As before, the CPU's microprocessor 10 is in bi-directional digital communication with the microprocessors of the sonde units. However, since there are two sonde units, microprocessor 10 is in communication with microprocessor 16a of sonde unit 64 via lines 28a and 29a, and with microprocessor 16b of sonde 66 via lines 28b and 29b.

Sondes 64, 66 are identical to sonde unit 1 of Figure 1 except that they each further comprise an address selector 68a, 68b.

Address selector 68a, 68b is necessary in each sonde unit when several sonde units are controlled by a single CPU.

Address selector 68a and 68b are in uni-directional digital communication, with microprocessors 16a and 16b, via lines 72a and 72b, respectively. Simply, address selectors 68a and 68b identify their particular sonde unit. Accordingly, if the user wishes to see a measurement from one of the electrodes in sonde 66, address selector 68b would inform microprocessor 16b that its electrodes are being selected. Similarly, address selector 68a would inform microprocessor 16a that its electrodes are not being selected. These microprocessors then instruct the respective selector circuits 38b and 38a to act accordingly. By virtue of the presence of microprocessors 16a and 16b within their respective sonde units, the cabling necessary for address selectors 68a and 68b to perform their function is minimized.

The remainder of the components and their respective functions in sonde units 64 and 66 are identical to those in sonde unit 1 of Figure 1. As can also be seen, sonde unit 64 does not include the optional stirrer.

The multi-probed metering apparatus illustrated in Figure 3 comprises a CPU 76, and two sonde units 78 and 80.

Except for the presence of the stirrer in sonde unit 78, sonde unit 78 comprises the same components as those illustrated in sonde unit 64 of Figure 2. On the other hand, while sonde unit 80 does comprise probes, an electronic selector circuit and an address selector, it does not comprise a ROM unit, an A/D converter or a microprocessor.

In view of the above, CPU 76 has been slightly modified for signal conditioning of such types of electrodes, thus expanding even more the flexibility of the apparatus of the present invention. Generally, CPU 76 further comprises additional circuitry to compensate for the components omitted from sonde unit 80. For example, in addition to the components present in CPUs 2 and 3 of Figures 1 and 2, respectively, CPU 76 further comprises an A/D converter 90 which is in bi-directional digital communication with the CPU's microprocessor 92 via lines 93 and 95. A/D converter 90 is also in uni-directional digital communication with electronic selector circuit of sonde unit 80. Moreover, since there is no microprocessor in sonde unit 80, its electronic selector circuit and address selector are both in uni-directional digital communication with the CPU's microprocessor 92.

In practice, if a user desires to monitor a signal from sonde unit 78, microprocessor 92 interrogates the signals from the address selectors of each sonde unit and transmits a digital signal to the microprocessor of sonde unit 78 via line 94. The microprocessor of sonde unit 78 will then transmit a digital signal to the electronic selector circuit of that same sonde unit.

The selected monitored analog signal from the electrodes in sonde unit 78 then passes through the electronic selector circuit to the A/D converter wherein the analog signal will be digitized.

Thereafter, the digital signal will pass to the CPU's microprocessor 92, via the sonde microprocessor and line 96. The CPU's microprocessor 92 will then process the signal according to the user's desire.

On the other hand, if the user desires to monitor a signal from sonde unit 80, microprocessor 92 would again interrogate the signals from the address selectors of each sonde unit. Based upon this interrogation scheme, microprocessor 92 will transmit a digital signal to the electronic selector circuit of sonde unit 80 via line 97.

The selected monitored analog signals from the electrodes in sonde unit 80 then pass through the electronic selector circuit of sonde unit 80 to A/D converter 90 in CPU 76 via line 99. The analog signals will then be digitized.

Thereafter, the digital signal will pass from A/D converter 90 to microprocessor 92 via line 95. The microprocessor 92 then processes the signal according to the user's desire.

Due to the enlarged storage capabilities of RAM 102, information from sonde units 78 and 80 can be employed to perform multi-pass linearization mathematical computations in microprocessor 92.

After these mathematical computations have been made, microprocessor 92 produces a digital output which can be used as such in parallel form along bus 103, in series form along bus 105 and/or in analog form along line 107, after first passing through D/A converter 109.

As can be seen, the circuitry and design of the improved apparatus of the invention affords a user a degree of flexibility which has, heretofore, not been provided by a self-sustained hand-held multi-probed unit. Examples of the increased degree of flexibility afforded by the improved multi-probed metering apparatus of the present invention include, but are not limited to:
(a) Up to 32 channels can be configured, for example, for: sensor-type, input signal type, engineering symbol, and linearization. these can be user-selected through the improved apparatus of the present invention without having to be interfaced with an external computer source.
(b) The apparatus of the present invention may either be completely programmed without being connected to an external computer source, or programmed via external computer software or both. Specifically, due to the circuitry design of the present invention, the apparatus of the invention has the capability of having a CPU with a full-functioning menu. This allows the user to change various parameters while in the field without having to interface the apparatus with an external computer source.
(c) The CPU's microprocessor can either use its own signal conditioning circuit (e.g., an A/D converter) to measure signals directly and calculate the resultant display, or can communicate, via a bi-directional digital bus to a signal conditioning circuit in the sonde unit, or both (see, for example, Figure 3).
(d) The CPU of the apparatus of the invention has the capability of storing data in its own RAM, or outputting the data as it makes the measurement through its digital output lines, or both.
(e) The CPU of the apparatus of the invention can have its digital output connected to an external computer source, as stated earlier, or to a printer. This feature eliminates the need to employ a computer when requiring only a printout of results.

In addition to the above, the flexibility of the improved apparatus may also be employed in a number of different configurations, such as:
(a) Several sonde units can be connected to a multiplexing box which then connects to a single CPU, to program and control several sonde units as in Figure 2.
(b) Since the CPU can be designed to include its own A/D converter, one CPU can receive and process signals from both digital output-producing sonde units and analog output-producing sonde units, as in Figure 3.
(c) The apparatus of the invention can have the digital output produced by its CPU micro-processor used to set alarm conditions and/or to report results in real time, while simultaneously date logging. This feature is especially useful when monitoring alarm levels at dangerous chemical concentrations.

This real time reporting and alarm monitoring can occur simultaneously with the in-field data logging capabilities. It is also possible to record data only when an alarm situation has occurred.

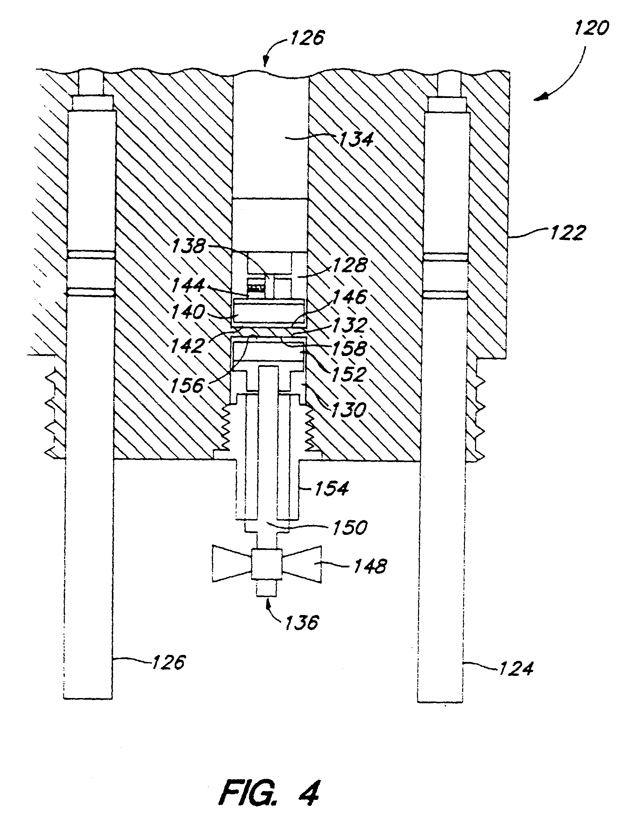

Referring to Figure 4, to skilled artisans, it would be undesirable to integrate a stirrer within the body of the sonde unit due to the necessity to have a water-tight seal within the sonde. Conventional stirrers are typically attached to the external body of the sonde unit, thus eliminating any problems associated with destroying the water-tight configuration.

The preferred embodiment integrates the stirrer within the body of the sonde unit, without destroying the water-tight configuration of the sonde unit.

In Figure 4, the sonde unit 120 includes a sonde body 122, probes 124 and 126, and a stirrer 126 integrated into sonde body 122 by way of two opposing and aligned chambers 128 and 130 in sonde body 122. These chambers define a wall portion 132 therebetween. Moreover, there is no physical passage between chambers 128 and 130.

The stirrer 126 has stirrer driving motor 134 and a propeller 136. The motor 134 is associated with a drive shaft 138 and a magnet 140. Drive shaft 138 interconnects magnet 140 to the motor.

The magnet 140 has a planar surface 142 which is generally perpendicular to the longitudinal axis of drive shaft 138, and an attachment 144 for physically connecting it to drive shaft 138.

The motor 134 is dimensioned such that it can fit into chamber 128 in sonde body 122. The motor 134 also has means (not shown) for fixedly connecting it to sonde body 122.

The overall length and configurations of the motor 134 is such that, when it is inserted into chamber 128, and fixedly attached to sonde body 122, the magnet 140 is in close adjacent relationship with the upper surface 146 of sonde body wall portion 132. Moreover, the overall length and configuration of drive motor 134 should be such that, when it is positioned into sonde chamber 128 and fixedly attached to sonde body 122, the magnet 140 can freely rotate in either direction.

The propeller 136 has propeller blades 148, shaft 150, a magnet 152 and securing means 154. The magnet 152 is physically connected to the propeller via shaft 150. This configuration is, in turn, rotatably attached to securing means 154. Magnet 150 has at least one planar surface 156 having a longitudinal axis which is generally perpendicular to that of shaft 150.

The propeller 136 is dimensioned such that it can be fixedly attached to sonde body 122 and fit within sonde body chamber 130. Specifically, the propeller 136 is so dimensioned that when fixedly attaching securing means 154 to sonde body 122, the planar surface 156 is in close adjacent relationship with the lower surface 158 of sonde body wall portion 132. After the propeller 136 is fixedly attached to sonde body 122, the magnet 152 must be able freely to rotate within chamber 130.

The magnetic fields emitted by magnets 140 and 152 must be sufficient to pass through sonde body wall portion 132 and magnetically couple them together.

In practice, motor 134 and propeller 136 are fixedly attached to sonde body 122, the magnet 140 is rotated clockwise or counter-clockwise, and since the magnets are magnetically coupled together, on rotating magnet 140, magnet 152 is correspondingly rotated. This, in turn, will cause propeller 148 to rotate, thus, causing fluid to flow over probes 124 and 126.

Since there is no physical connection between motor 134 and propeller 136, the stirrer 136 can be integrated into sonde body 122 without destroying the water-tight configuration of the sonde body. Furthermore, the overall size of sonde unit 120 is substantially reduced.

As stated earlier, problems associated with conventional multi-probed apparatuses pertain to repairing and/or replacing damaged electrodes, and to changing the parameters which the electrodes monitor or measure. Since the measurements often take place in liquids e.g., water, the connection between the electrodes and the circuitry within the sonde unit must remain dry even when electrodes have to be repaired or replaced. Hitherto this has generally necessitated that the entire sonde unit is taken out of commission and returned to a shop where this work can be performed. Since maintaining an inventory of sonde spare parts is very costly, the industry would welcome a device which enables, and/or has means for, field (in situ) replacement and/or repair of electrodes/probes, without destroying the necessary water-tight configuration of the sonde unit.

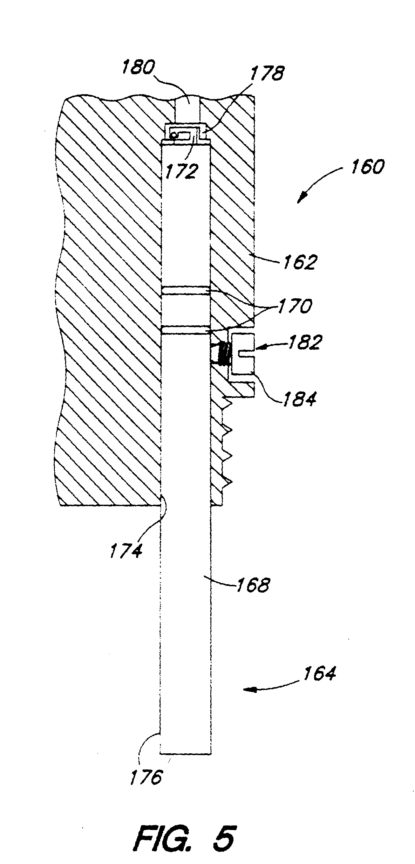

Accordingly, yet a further aspect of the invention relates to a means for field replacement and/or repair of electrodes of the apparatus without destroying the water-tight configuration of the sonde unit. One example of such an embodiment of the present invention is illustrated in Figure 5.

In Figure 5, the sonde unit 160 includes a sonde body 162, and a monitoring component 164.

Monitoring component 164 comprises: electrode 168, sealing means 170, typically O-rings of deformable material and connecting means 172. Sonde body 162 has a probe-receptacle chamber defined therein. This chamber, in turn, defines inside wall surface 174 of the sonde body 162.

Component 164 is dimensioned such that the outside wall surface 176 of the probe is in close abutting or adjacent relationship with the sonde unit in wall surface 174. The circumference of the O-rings 170 is slightly larger than that of the chamber defined by inside wall surface 174 such that a water-tight seal is made therebetween.

This embodiment of the present invention requires a coupling means 178, typically a conventional BNC socket designed to accept connecting means 172 of electrode 168, signal cable 180 and monitoring component.

The coupling means of this embodiment can be any such suitable means known to those skilled in the art, e.g. DIN and/or coaxial connectors.

In practice, if there is a need to replace and/or repair an electrode in accordance with this embodiment of the invention, electrode 168 is manoeuvred to disengage connecting means 172 from socket 178. Thereafter, electrode 168 is retracted from the chamber defined by surface 174.

The replacement monitoring component 164' (not shown) is then introduced into the chamber. Thereafter, the connector of this monitoring component is engaged with socket 178.

Due to the presence and configuration of the O-rings 170, this method of replacing electrodes in a sonde unit does not destroy the necessary water-tight configuration of the sonde. The size, composition and shape of the deformable O-rings depend on the composition of the solution in which the sonde is being submerged, the amount of pressure exerted by the solution into which the sonde is being submerged, and/or the temperature of the solution into which the sonde is being submerged.

In Figure 5, an optional securing means, here a grub screw 182 is also employed. The grub screw 182 has a screw head 184, and a corresponding threaded portion which is perpendicular to the longitudinal axis of, and opens into the sonde body chamber.

In practice, the monitoring portion 164 is first engaged into the sonde body chamber by socket 178. Thereafter, grub screw 182 is threaded into sonde body 162 until grub screw 182 contacts the wall surface 175 and causes the latter to press against the wall surface 174.

It should be noted that, since the securing means illustrated in Figure 5 requires a passageway from outside the sonde body to a chamber within the sonde body, this particular embodiment of a securing means must be positioned below the O-rings 170 in order to preserve the water-tight configuration of the sonde.

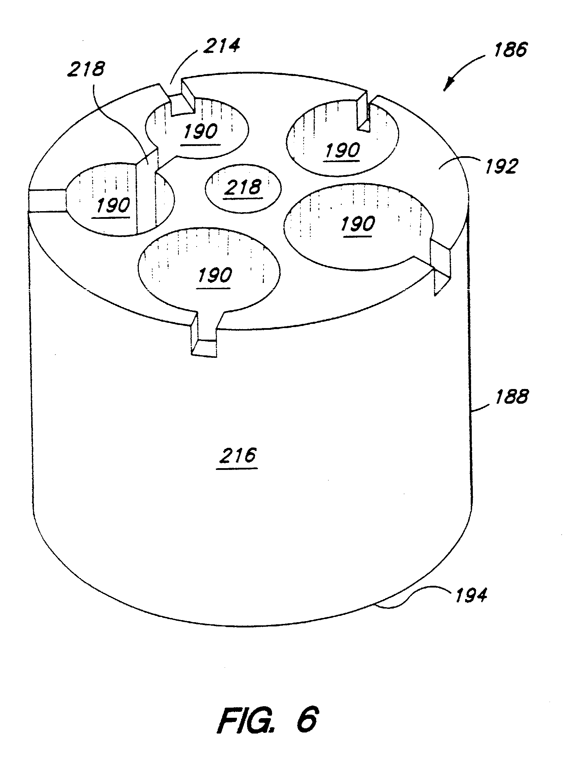

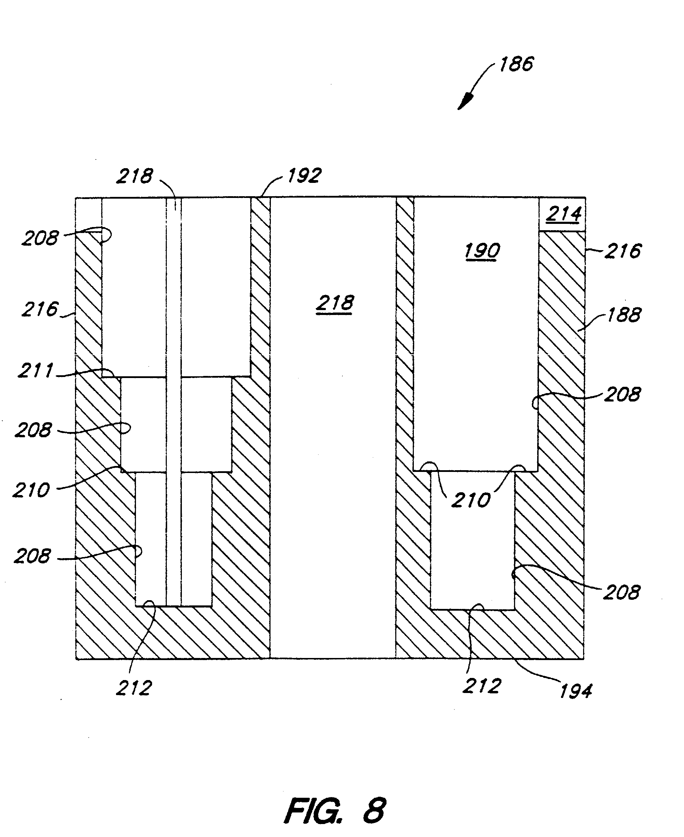

An important aspect of the present invention pertains to an improved means for calibrating its plurality of electrodes. One embodiment of this improved calibration means is illustrated in Figures 6-9.

In Figures 6-9, the improved calibration means is designated by 186 and comprises an annular calibration cup body 188 having two parallel planar end surfaces 192 and 194.

Cup body 188 has a plurality of vertically-oriented calibration wells 190 extending from the upper surface 192. They do not, however, pass through to the lower surface 194.

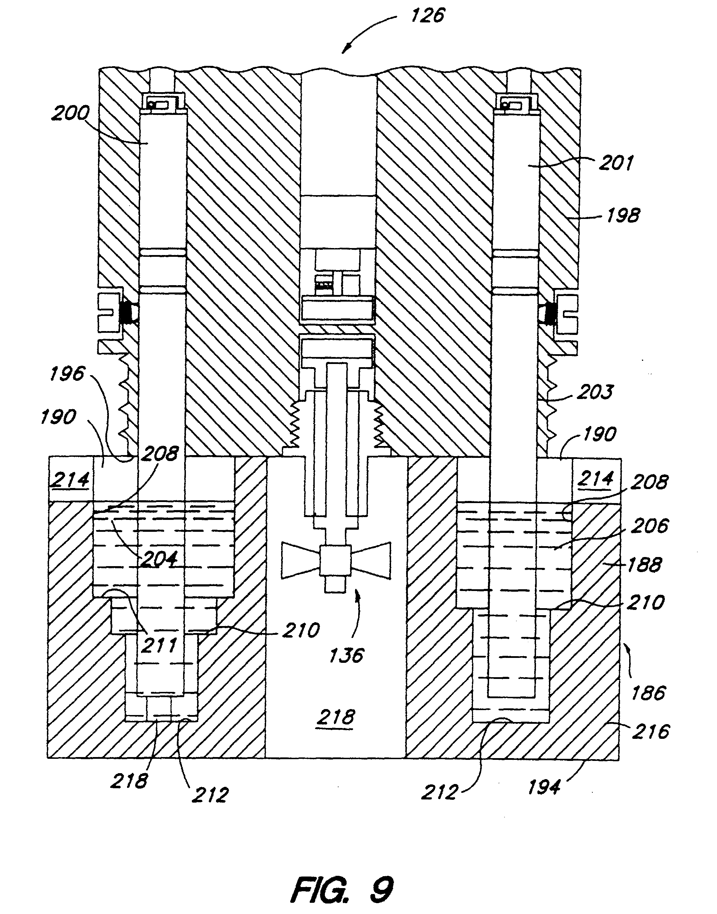

The configuration of wells 190 in cup body 188 corresponds with the configuration of electrodes protruding from the lower portion 196 of a particular sonde body 198 (see Figures 9). The depth of wells 190 must be greater than the length of the associated electrode. Each well is provided with calibration and/or test fluid identification indicia.

Therefore, in practice, electrodes 200 and 201 must with their outer surface 203 be able to fit loosely within the internal walls 208 corresponding wells 190 in cup body 188 such that the sonde body lower portion 196 rests against the upper surface 192 of the cup body, as illustrated in Figure 9.

In use, calibration solutions 204 and 206 are poured into wells 190 which correspond with the electrodes with which the particular solution pertains. For example, if probe 200 monitors pH and probe 201 monitors turbidity, solution 204 would be a pH calibration solution and solution 206 would be a turbidity calibration solution.

After each well is filled to the appropriate level with the proper calibration solution, the electrodes are positioned over their corresponding wells, and are inserted therein until the lower surface 196 of the sonde body rests upon upper surface 192 of the cup. This will result in each electrode being at least partially surrounded with its particular calibration solution. Thereafter, each probe is calibrated accordingly and simultaneously, while eliminating the possibility of contaminating one particular electrode with the calibration solution for another electrode.

Optionally, means are provided for determining the appropriate amount of calibration solution which should be introduced into the well prior to insertion of the electrodes therein, e.g. by means of markings placed on the inside wall surface of the wells; or the cup body may be made out of a transparent or translucent material, or a pre-measured amount of calibration solution may be placed within the well.

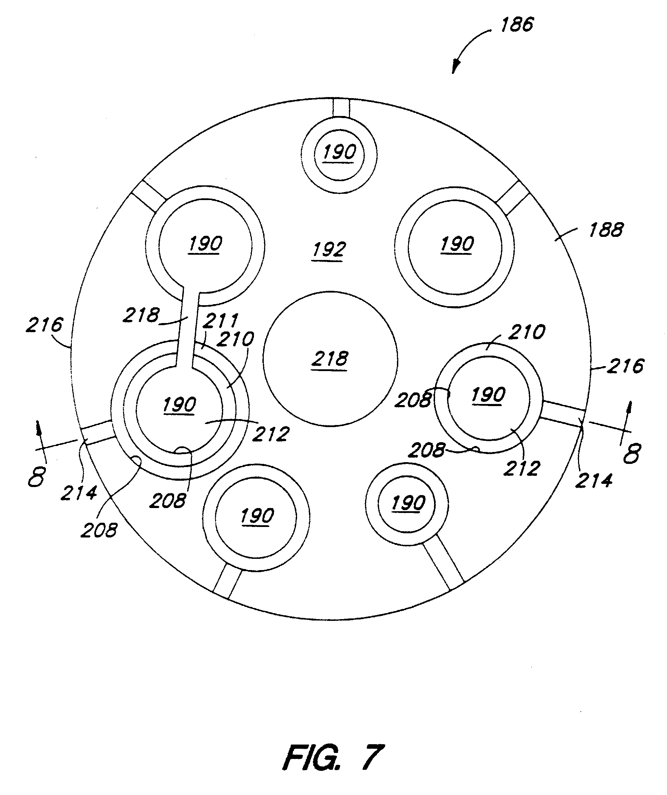

A preferred method is illustrated in Figures 7-9. As can be seen, the vertical inside wall surfaces 208 of wells 190 have horizontal ledges 210 formed therein.

The distance between ledge 210 and well bottom 212 is such that, when a calibrating solution is filled up to the ledge 210, inserting the respective electrode within well 190 would not result in the calibration solution flowing over cup body upper surface 192. The positioning of ledge 210 within well 90 must take into consideration the total volumetric capacity of well 190 and the amount of solution which will be displaced by that portion of the electrode submerged within the calibrating solution.

In certain instances an electrode/probe has to be calibrated for two different parameters, e.g. zero setting and slope setting. Again, certain electrodes may require to be electrically connected to one another during calibration. An example would be the measurement of sodium and contact with a pH electrode. In this case, a slot 218 (Figures 6-9) is present between two separate calibration wells. This slot allows the fluid to flow between the two wells. Additionally, the required volume of calibrating a specific parameter of each sonde unit may be different. Therefore, the improved calibration means of the present invention can be modified to include a second ledge 211 defined within well 190.

Another means for preventing the contamination of a particular electrode with the calibration solution of a different electrode is constituted by an overflow channel 214 defined in the upper surface of the cup. Overflow channel 214 passes from the outside wall surface 216 of the cup body to its inside wall surface 208.

In practice, the combined volume of calibration solution present within well 190 and the portion of the electrode submerged within the calibration solution is greater than the total volumetric capacity of well 190; hence the excess amount of calibration solution will escape from well 190 through channel 214. This technique assures that specific electrodes will not be contaminated by a calibration solution from one well overflowing into an adjacent well.

A central slot or opening 219 is also defined within upper surface 192. This opening is dimensioned to receive the propeller 136 of the stirrer 126. Opening 219 can pass completely through cup body 188. However, this is not essential.

The stirrer is an optional feature of the "electronic" aspect and the "calibration" aspect of the present invention. Accordingly, opening 219 is also optional.

The improved calibration means of the present invention can reduce calibration times for multi-probed metering apparatuses by over 50%. Moreover, as can also be seen, the improved calibration means of the present invention need not be limited to the specific multi-probe metering apparatus disclosed herein.

In a non-illustrated embodiment of this invention, each well 190 of the calibration cup (or another, similarly readily attachable and detachable cup) may contain at its bottom a sponge-like insert. When the sonde is not used for any length of time, this cup is attached, with the spongy insert filled with water. The result is a moisture-saturated atmosphere around the electrodes which prevents the undesirable occurrence of the electrodes drying out and thereby becoming defective and/or inaccurate.

## Claims

1. A sonde comprising a housing (122, 162, 198); a plurality of discrete sensing electrodes (34, 36; 34a, 36a; 34b; 124, 126; 168; 200, 201) of analog output attached to said housing for sensing a corresponding plurality of parameters to be measured; means (48, 50; 38a, 38b) for selectably activating each said electrode; characterised in that it includes a calibration cup (186) provided for engagement by the housing, said cup containing a plurality of calibration wells (190) shaped and positioned, and of a number, such as to receive and encompass each of the said sensing electrodes; the configuration of the wells being such as to prevent undesired overflow from one predetermined well to another predetermined well.

2. A sonde according to claim 1 characterised in that selected wells (190) are interconnected and/or are provided with overflows (214) directed towards the outer edge of the cup.

3. A sonde according to claim 1 characterised in that each said well (190) is provided with calibration and/or test fluid identification indicia.

## Patentansprüche

1. Sonde, mit einem Gehäuse (122, 162, 198), einer Vielzahl von diskreten Fühlereiektroden (34, 36; 34a; 34b, 36a, 36b; 124, 168; 200, 201) mit analoger Ausgabe, die mit dem besagten Gehäuse verbunden sind, um eine korrespondierende Vielzahl von zu messenden Parametern zu fühlen, und Mitteln (48, 50; 38a, 38b) zur wahlweisen Aktivierung jeder der besagten Elektroden, dadurch gekennzeichnet,
daß sie einen Kalibrierungsbecher (186) aufweist, der vorgesehen ist zur Verbindung mit dem Gehäuse, wobei der Becher eine Mehrzahl von Kalibrierungsbohrungen (190) aufweist, die geformt, positioniert und von einer Zahl sind, um jede der genannten Fühlerelektroden aufzunehmen und zu umgeben, wobei die Anordnung der Bohrungen so ist, um ein unerwünschtes Überströmen von einer vorbestimmten Bohrung zu einer anderen vorbestimmten Bohrung zu verhindern.

2. Sonde gemäß Anspruch 1,
dadurch gekennzeichnet,
daß ausgewählte Bohrungen (190) miteinander verbunden sind und/oder mit Überläufen (214) versehen sind, die zur äußeren Kante des Bechers gerichtet sind.

3. Sonde gemäß Anspruch 1,
dadurch gekennzeichnet,
daß jede der genannten Bohrungen (190) versehen ist mit einem Kalibrierungs- und/oder Testflüssigkeitsidentifizierungsindex.

## Revendications

1. Sonde comprenant un logement (122, 162, 198) ; une pluralité d'électrodes de détection séparées (34, 36 ; 34a, 36a ; 34b ; 124, 126 ; 168 ; 200, 201), de sortie analogique, fixées audit logement pour détecter une pluralité correspondante de paramètres à mesurer ; des moyens (48, 50 ; 38a, 38b) pour activer sélectivement chacune desdites électrodes ; caractérisée en ce qu'elle comprend une coupelle d'étalonnage (186) prévue pour venir facilement en prise avec le logement, ladite coupelle contenant une pluralité de puits d'étalonnage (190) configurés et positionnés, et en une quantité adéquate, de façon à recevoir et à englober chacune desdites électrodes de détection ; la configuration des puits étant telle qu'elle empêche un débordement non souhaitable d'un puits prédéterminé vers un autre puits prédéterminé.

2. Sonde selon la revendication 1, caractérisée en ce que des puits choisis (190) sont interconnectés et/ou sont pourvus d'écoulements (214) dirigés vers le bord extérieur de la coupelle.

3. Sonde selon la revendication 1, caractérisée en ce que chacun desdits puits (190) est pourvu d'indices d'identification du fluide d'étalonnage et/ou du fluide testé.
